# EUROPEAN PATENT APPLICATION

(11) **EP 3 766 914 A1**
(43) Date of publication of application: **20.01.2021**
(21) Application number: 19186625.0
(22) Date of filing: 16.07.2019
(51) Int. Cl.: C08G 63/47, C08G 63/553, C09D 167/07

(54) **A COATING COMPOSITION**

(71) Applicant: PPG Europe B.V., 1422 AD Uithoorn (NL)
(72) Inventor: The designation of the inventor has not yet been filed
(74) Representative: Appleyard Lees IP LLP

(57) **Abstract**

An auto-oxidisable coating composition comprising:
(a) a modified alkyd resin, wherein the modified alkyd resin comprises the reaction product of reactants comprising:
i. a polybasic acid or anhydride thereof;
ii. a polyhydric alcohol;
iii. an unsaturated fatty acid or oil; and
iv. an unsaturated conjugated monocarboxylic acid having up to 10 carbon atoms; and

(b) a primary drying agent comprising a metal selected from the group comprising manganese, vanadium and iron, and mixtures thereof, wherein the primary drying agent is substantially free of cobalt.

## Description

### FIELD

The present invention relates in general to a coating composition. In particular, the present invention relates to an auto-oxidisable coating composition comprising a modified alkyd resin. The present invention also extends to a substrate coated with the coating composition, for example as used in the construction industry.

### BACKGROUND

Alkyd resins are commonly used as binders in ambient cure, water- and solvent-based coating compositions. They have low surface tension, which facilitates pigment wetting and adhesion to a wide variety of substrates, they can be applied by a variety of techniques and they are cost effective.

Alkyd resins are generally prepared from polybasic acids, polyhydric alcohols and unsaturated fatty acids or oils. Auto-oxidisable alkyd resins comprise drying or semi-drying unsaturated fatty acids or oils. When a coating composition comprising an alkyd resin is applied to a substrate, solvent evaporation and crosslinking of the unsaturated fatty acid side chains occurs to initiate the drying process and provide a solid and uniformly dried film.

Crosslinking of the unsaturated fatty acid chains occurs when activated methylene groups in the unsaturated fatty acids or oils are oxidised in air to give hydroperoxides, which subsequently decompose to generate free radicals. The time needed for crosslinking and drying to occur depends on the concentration and type of unsaturated fatty acid or oil used to prepare the alkyd resin.

There is a desire to increase the solids content of coating compositions in order to reduce solvent vapour emission to the atmosphere. Lowering the intrinsic viscosity of an alkyd resin means that less solvent is needed to reach an acceptable application viscosity, so that the overall volatile content of the coating composition can be reduced. There are a number of ways to reduce the intrinsic viscosity of an alkyd resin, for example by lowering the average molecular weight of the alkyd resin or by designing molecules to have a spherical shape. Both of these options may reduce chain entanglement. Starting from a low molecular weight resin typically leads to longer drying times.

Another way to reduce the overall volatile content of a coating composition is to replace all or part of the traditional solvents with reactive diluents. Reactive diluents are low-viscosity compounds that are chemically similar to alkyd resins. These can be used to reduce the viscosity of the coating composition without contributing to the emission of solvents during the drying phase of coating. The reactive diluents may be incorporated in the drying polymeric matrix. The use of reactive diluents typically leads to a reduction of the average molecular weight of the binder system and can result in slower drying.

To compensate for the loss of drying performance of coating compositions comprising alkyd resins with a reduced solvent content, the degree of unsaturation of the fatty acids (which is usually expressed as the iodine number) can be increased. Such increases in the degree of unsaturation may lead to, for example, a strong tendency to yellow, untimely skin formation, early embrittlement of the coating film and a propensity to wrinkle.

It has been found that alkyd resins modified with highly unsaturated mono basic acids, including sorbic acid (2,4-hexadienoic acid), typically increase the speed of oxidative drying substantially without affecting the intrinsic viscosity of the resin. The modified alkyd resins typically also do not suffer from detrimental side effects such as yellowing, embrittlement, skinning and wrinkling. Despite the increase in drying speed, it is still necessary to accelerate the drying process for commercial purposes. The drying process is usually accelerated by adding a metal-based drying catalyst. These metal-based catalysts are commonly referred to as "drying agents", "driers" or "siccatives".

The metal-based drying catalysts typically comprise alkaline, alkaline-earth or transition metals and can significantly reduce the drying time. Metal-based drying catalysts are commonly divided into three main categories according to their catalytic activity: primary drying agents; coordination drying agents and secondary drying agents. Primary drying agents possess significant catalytic activity, coordination drying agents promote the film-forming process by bridging two or more polymer chains and secondary drying agents activate the metal in the primary drying agent.

The most widely used primary drying agents are cobalt carboxylates because of their good drying performance at ambient temperatures and for aesthetic reasons. However, there is a desire to find alternative drying agents that show a comparable or superior drying performance to that of cobalt-based drying agents.

### SUMMARY

According to the present invention there is provided an auto-oxidisable coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided a paint, varnish, lacquer, stain, enamel or printing ink comprising a coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided a substrate coated on at least a portion thereof with a coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided a substrate coated on at least a portion thereof with a paint, varnish, lacquer, stain, enamel or printing ink comprising a coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided a method of coating at least a portion of a substrate comprising applying thereto a coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided a method of coating at least a portion of a substrate comprising applying thereto a paint, varnish, lacquer, stain, enamel or printing ink comprising a coating composition comprising:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

There is also provided the use of a primary drying agent in a coating composition, such as in an auto-oxidisable coating composition, comprising a modified alkyd resin, wherein the modified alkyd resin comprises the reaction product of reactants comprising:
i. a polybasic acid or anhydride thereof;
ii. a polyhydric alcohol;
iii. an unsaturated fatty acid or oil; and
iv. an unsaturated conjugated monocarboxylic acid having up to 10 carbon atoms;
wherein the primary drying agent comprises a metal selected from the group comprising manganese, vanadium and iron, and mixtures thereof, and wherein the primary drying agent is substantially free of cobalt.

There is also provided the use of a coating composition in a varnish, lacquer, paint, stain, enamel or printing ink, wherein the coating composition comprises:
(a) a modified alkyd resin, wherein the modified alkyd resin comprises the reaction product of reactants comprising:
   i. a polybasic acid or anhydride thereof;
   ii. a polyhydric alcohol;
   iii. an unsaturated fatty acid or oil; and
   iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

### DESCRIPTION

When describing the compositions of the invention, the terms used are to be construed in accordance with the following definitions, unless a context dictates otherwise.

As used in the specification and the appended claims, the singular forms "a", "an," and "the" include both singular and plural referents unless the context clearly dictates otherwise. By way of example, "a binder" means one binder or more than one binder. By way of example, "a modified alkyd resin" means one modified alkyd resin or more than one modified alkyd resin. References to a number when used in conjunction with comprising language include compositions comprising said number or more than said number.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

As used herein, unless otherwise expressly specified, all numbers such as those expressing values, ranges, amounts of percentages may be read as if prefaced by the word "about", even if the term does not expressly appear.

The term "about" as used herein when referring to a measurable value such as a parameter, an amount, a temporal duration, and the like, indicate that a value includes the standard deviation of error for the device or method being employed to determine the value. The term "about" is meant to encompass variations of +/-10% or less, +/-5% or less, or +/-0.1 % or less of and from the specified value, insofar such variations are appropriate to perform in the disclosure. It is to be understood that the value to which the modifier "about" refers is itself also specifically disclosed.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

The term "alkenyl", as used herein, relates to hydrocarbon radicals having a double bond, being straight, branched, cyclic or polycyclic moieties or combinations thereof. The alkenyl groups may optionally be substituted. Examples of suitable substituents for the alkenyl groups include alkyl (such as C₁-C₁₀ alkyl), aryl (such as C₆-C₁₀ aryl), cycloalkyl (such as C₃-C₁₀ cycloalkyl), halo, hydroxyl and ether groups.

As used herein, the term "substantially free" means that the material being discussed is present in the composition, if at all, as an incidental impurity. In other words, the material does not affect the properties of the composition. As used herein, the term "completely free" means that the material being discussed is not present in the composition at all.

Unless otherwise defined, all terms used in the disclosure, including technical and scientific terms, have the meaning as commonly understood by one of ordinary skill in the art to which this disclosure belongs. By means of further guidance, definitions for the terms used in the description are included to better appreciate the teaching of the present disclosure. All publications referenced herein are incorporated by reference thereto.

Suitable features of the compositions of the invention are now set forth.

The coating composition of the present invention is an auto-oxidisable composition. Thus, the coating composition crosslinks via an auto-oxidation mechanism. As used herein, "auto-oxidation" means that the coating composition undergoes oxidation in the presence of air or oxygen and forms peroxides and hydroperoxides, i.e. without the need for additional initiators or curing agents.

The coating composition of the present invention may not include an initiator or curing agent (such as an organic peroxide). The coating composition comprises a modified alkyd resin and a primary drying agent.

The coating composition of the present invention may be substantially free of cobalt. The coating composition of the present invention may comprise less than 0.001 wt% of cobalt, such as less than 0.0001 wt% of cobalt, such as less than 0.00001, 0.000001 or 0.0000001 wt% of cobalt based on the total weight of the composition. The coating composition may be completely free of cobalt.

The coating composition can comprise 10 % by weight or greater, such as 15 % by weight or greater or 20 % by weight or greater of the modified alkyd resin, or can comprise 98 % by weight or lower, such as 90 % by weight or lower or 85 % by weight or lower of the modified alkyd resin based on the total weight of the composition. The modified alkyd resin may be present in the coating composition in an amount ranging from 10 to 98 % by weight, such as from 15 to 90 % by weight, such as from 20 to 85 % by weight, based on the total weight of the composition, or any other range combination using these endpoints.

The coating composition of the present invention may further comprise an alkyd resin substantially free of an unsaturated conjugated monocarboxylic acid having up to 10 carbon atoms. Suitable such alkyds resins include long oil, very long oil and medium oil alkyd resins for example derived from 45 to 85 % by weight, such as derived from 45 to 70 % by weight of fatty acids, polyurethane modified alkyds, silicone modified alkyds, styrene modified alkyds, acrylic modified alkyds (e.g. (meth)acrylic modified alkyds), vinylated alkyds, polyamide modified alkyds and epoxy modified alkyds or mixtures thereof.

The weight ratio of the modified alkyd resin and the alkyd resin substantially free of an unsaturated conjugated monocarboxylic acid having up to 10 carbon atoms may be in the range from 10 to 100: 90 to 0 parts by weight, such as from 20 to 90: 80 to 10 parts by weight or even from 40 to 80: 60 to 20 parts by weight.

The coating composition can comprise 0.001 % by weight or greater, such as 0.003 % by weight or greater, of the primary metal drying agent, or can comprise 1.0 % by weight or lower, such as 0.5 % by weight or lower of the primary metal drying agent based on the total weight of the composition. The primary metal drying agent may be present in the coating composition in an amount ranging from 0.001 to 1.0 % by weight, such as from 0.003 to 1.0 % by weight based on the total weight of the composition, or any other range combination using these endpoints.

### MODIFIED ALKYD RESIN

The modified alkyd resin comprises the reaction product of reactants comprising:
i. a polybasic acid or anhydride thereof;
ii. a polyhydric alcohol;
iii. an unsaturated fatty acid or oil; and
iv. an unsaturated conjugated monocarboxylic acid having up to 10 carbon atoms.

The modified alkyd resin is a polycondensation product of reactants comprising components i to iv listed above. The reference herein to a "modified alkyd resin" is intended to refer to an alkyd resin which is modified with the unsaturated conjugated monocarboxylic acid having up to 10 carbon atoms. The unsaturated conjugated monocarboxylic acid having up to 10 carbon atoms may act as a monomer in the synthesis of the alkyd resin, for example wherein the unsaturated conjugated monocarboxylic acid replaces some of the unsaturated fatty acid that would be present in an unmodified alkyd resin.

The term "alkyd resin" may be used interchangeably with the term "alkyd binder".

The polybasic acid or anhydride thereof may be any suitable polybasic acid or anhydride thereof. Suitable polybasic acids or anhydrides thereof include aliphatic, cycloaliphatic or aromatic polybasic acids or anhydrides thereof. For example, suitable polybasic acids or anhydrides thereof include phthalic acid, phthalic anhydride, isophthalic acid, terephthalic acid, tetrahydrophthalic acid, tetrahydrophthalic anhydride, 1,2-cyclohexane dicarboxylic acid, 1,2-cyclohexane dicarboxylic anhydride, 1,3-cyclohexane dicarboxylic acid, 1,4-cyclohexane dicarboxylic acid, trimellitic acid, trimellitic anhydride, pyromellitic acid, pyromellitic dianhydride, maleic acid, maleic anhydride, fumaric acid, itaconic acid, itaconic anhydride, succinic acid, succinic anhydride, glutaric acid, adipic acid, sebacic acid, azelaic acid, citric acid, dimeric fatty acids and mixtures thereof. The polybasic acid or anhydride may comprise phthalic anhydride.

The polyhydric alcohol may be any suitable polyhydric alcohol. Suitable polyhydric alcohols include for example ethylene glycol, 1,2-propanediol, 1,3-propanediol, 1,2-butanediol, 1,3-butanediol, 1,4-butanediol, 3-methyl-1,5-pentanediol, 1,6-hexanediol, diethylene glycol, triethylene glycol, neopentyl glycol, glycerol, trimethylol propane, trimethylol ethane, pentaerythritol, dipentaerythritol, sorbitol and mixtures thereof. The polyhydric alcohol may comprise pentaerythritol.

The unsaturated fatty acid or oil may be any suitable unsaturated fatty acid or oil. The unsaturated fatty acid or oil may be a polyunsaturated fatty acid or oil. By an oil we mean a triglyceride of an unsaturated fatty acid. Suitable unsaturated fatty acids include for example tall oil fatty acid, and fatty acids derived from oils such as safflower oil, linseed oil, soya bean oil, safflower oil, tung oil, sunflower oil, rapeseed oil, peanut oil, sardine oil, herring oil, tallow oil and cottonseed oil, and mixtures thereof. Suitable oils include for example safflower oil, linseed oil, soya bean oil, safflower oil, tung oil, sunflower oil, rapeseed oil, peanut oil, sardine oil, herring oil, tallow oil and cottonseed oil, and oil derived from tall oil fatty acid, and mixtures thereof. As the skilled person will appreciate, tall oil fatty acids exist in nature in the form of free fatty acids and may be reacted with glycerol (using well known methods) to form the oil (i.e. the triglyceride thereof). The other oils listed above exist in nature in the form of triglycerides and may (using well known methods) be chemically hydrolysed into the corresponding free fatty acids (and glycerol). The aforementioned unsaturated fatty acids and oils are commercially available.

As the skilled person would appreciate, oils may be classified as drying, semi-drying or non-drying based on the iodine number; for drying oil the iodine number is > 140; for semi-drying oil the iodine number is from 125 to 140, and for non-drying oil the iodine number is < 125 (see Surface Coatings: Science and Technology by Swaraj Paul, New York: Wiley and Sons; 1985, p. 89).

Suitable oils for preparing the modified alkyd resin are those having an iodine value of from 90 to 180 mg/g, such as from 110 to 150 mg/g.

The unsaturated conjugated monocarboxylic acid has up to 10 carbon atoms and any suitable such monocarboxylic acid may be used. For example, the unsaturated conjugated monocarboxylic acid may be of the formula R-CO₂H, wherein R represents an optionally substituted C₄-C₉ alkenyl group comprising at least two conjugated double bonds. The unsaturated conjugated monocarboxylic acid may be of the formula R-CO₂H, wherein R represents an optionally substituted C₄-C₆ (such as a C₅) alkenyl group comprising at least two conjugated double bonds. The unsaturated conjugated monocarboxylic acid may be of the formula R-CO₂H, wherein R represents an optionally substituted C₄-C₉ alkenyl group comprising two conjugated double bonds. Any suitable geometric isomer of the unsaturated conjugated monocarboxylic acid may be used.

Suitable unsaturated conjugated monocarboxylic acids include, for example, 2,4-hexadienoic acid, 2,4-pentadienoic acid, 2,4-heptadienoic acid, 3,5-heptadienoic acid, 2,4-octadienoic acid, 3,5-octadienoic acid, 2,4-nonadienoic acid, 8-methyl-4,6-nonadienoic acid, and mixtures thereof. The unsaturated conjugated monocarboxylic acid may comprise 2,4-hexadienoic acid (such as (2E,4E)-hexa-2,4-dienoic acid).

The modified alkyd resin may be prepared by any suitable known method.

For example, when the modified alkyd resin is prepared directly from an unsaturated fatty acid, the preparation is typically by direct esterification of the unsaturated fatty acid, the polyhydric alcohol, the polybasic acid or anhydride thereof and the unsaturated conjugated monocarboxylic acid having up to 10 carbon atoms, i.e. by the fatty acid process. The modified alkyd resin may be prepared in a one step or two step process.

In a one step process, the polybasic acid or anhydride thereof, the polyhydric alcohol, the unsaturated fatty acid and the unsaturated conjugated monocarboxylic acid having up to 10 carbon atoms are mixed in a reaction vessel and held at a suitable temperature.

In a two step process, the polyhydric alcohol and the unsaturated fatty acid may first be reacted and the product of the first reaction may be reacted with the polybasic acid or anhydride thereof and the unsaturated conjugated monocarboxylic acid having up to 10 carbon atoms. In another two step process, the polybasic acid or anhydride thereof, the polyhydric alcohol and the unsaturated fatty acid may first be reacted and the product of the first reaction may be reacted with the unsaturated conjugated monocarboxylic acid having up to 10 carbon atoms. In another two step process, the polyhydric alcohol, the unsaturated fatty acid and the unsaturated conjugated monocarboxylic acid having up to 10 carbon atoms may first be reacted and the product of the first reaction may be reacted with the polybasic acid or anhydride thereof.

The one or two step process may take place under reflux. The process may involve the addition of low amounts of a suitable solvent (such as xylene) to facilitate the removal of water during the esterification process. Typical reaction conditions are, for example, as described in US2861047, US4147675 or US 2014155514.

When the modified alkyd resin is prepared from an oil, the preparation is typically via a two step alcoholysis process, wherein in a first stage the oil is reacted with the polyhydric alcohol in order to prepare a mixture of partial esters of the polyhydric alcohols, and in a second stage the mixture of partial esters is condensed with the polybasic acid or anhydride thereof. The unsaturated conjugated monocarboxylic acid having up to 10 carbon atoms may be added in the first and/or second stage as appropriate.

The modified alkyd resin may be the polycondensation product of reactants comprising tall oil fatty acid, phthalic anhydride, pentaerythritol and 2,4-hexadienoic acid.

The modified alkyd resin may be the polycondensation product of reactants comprising soyabean oil fatty acid, phthalic anhydride, pentaerythritol and 2,4-hexadienoic acid.

Suitable modified alkyd resins include long and medium oil modified alkyd resins. As used herein, the term "long oil alkyd" refers to alkyd with an oil content of from 60 % by weight to 75 % by weight, and a fatty acid content of from 57 to 70 % by weight. As used herein, the term "medium oil alkyd" refers to an alkyd with an oil content of from 45 % by weight to 60 % by weight, and a fatty acid content of from 42 to 57 % by weight.

The modified alkyd resin may have a solids content of at least 50 % by weight, for example at least 60% or 65% by weight. The modified alkyd resin may have a solids content of at least 70% by weight, for example at least 75% or 80% by weight. The modified alkyd resin may have a maximum solids content of up to 100% by weight (for example in a solvent free resin), such as up to 90% or 80% by weight. The solids content is defined as non-volatile solids content or non-volatile matter (nvm). As used herein, the term "solids content" refers to the proportion of non-volatile material contained in the resin or composition. The details on how to measure the solids content may be found in ISO3251.

The total solids content of the modified alkyd resin can comprise 1 % by weight or greater, such as 15 % by weight or greater of the polybasic acid or anhydride thereof, or can comprise 30 % by weight or lower, such as 25 % by weight or lower, of the polybasic acid or anhydride thereof. The polybasic acid or anhydride thereof may be present in the total solids content of the modified alkyd resin in an amount of from 1 to 30 % by weight, such as 15 to 25 % by weight, based on the total solids content of the modified alkyd resin.

The total solids content of the modified alkyd resin can comprise 15 % by weight or greater, such as 17 % by weight or greater, of the polyhydric alcohol, or can comprise 25 % by weight or lower, such as 23 % by weight or lower, of the polyhydric alcohol. The polyhydric alcohol may be present in the total solids content of the modified alkyd resin in an amount of from 15 to 25 % by weight, such as 17 to 23 % by weight, based on the total solids content of the modified alkyd resin.

The total solids content of the modified alkyd resin can comprise 40% by weight or greater, for example 50 % by weight or greater, such as 55 % by weight or greater, of the unsaturated fatty acid or oil, or can comprise 85 % by weight or lower, for example 65 % by weight or lower, of the unsaturated fatty acid or oil. The unsaturated fatty acid or oil may be present in the total solids content of the modified alkyd resin in an amount of from 40 to 85 % by weight, for example 55 to 65 % by weight, based on the total solids content of the modified alkyd resin.

The total solids content of the modified alkyd resin can comprise 0.2 % by weight or greater, such as 1 % by weight or greater, of the unsaturated conjugated monocarboxylic acid, or can comprise 10 % by weight or lower, such as 5 % by weight or lower, of the unsaturated conjugated monocarboxylic acid. The unsaturated conjugated monocarboxylic acid may be present in the total solids content of the modified alkyd resin in an amount of from 0.2 to 10 % by weight, such as 1 to 5 % by weight, based on the total solids content of the modified alkyd resin.

### DRYING AGENTS

The primary drying agent comprises a metal selected from the group comprising manganese, vanadium and iron, and mixtures thereof. The primary drying agent is substantially free, such as completely free, of cobalt.

The above defined primary drying agents may promote the curing (or oxidative polymerisation) of a liquid modified alkyd resin. The above defined primary drying agents may reduce the drying or curing time of the modified alkyd resin.

When present, the manganese, vanadium and iron may have at least two accessible valence states. The primary drying agent may be selected from the group comprising a manganese ion containing salt, a vanadium ion containing salt and an iron ion containing salt, such as a salt of an organic or an inorganic anion (and mixtures thereof). Examples of suitable organic anions for forming the salts include carboxylates (for example octoates, napthenates, neodecanoates, linoleates and tallates) and β-diketonates (for example acetylacetonates, benzoylacetones and dibenzoylmethanes). The primary drying agent may be selected from the group comprising manganese carboxylate, vanadium carboxylate and iron carboxylate, and mixtures thereof. Suitable inorganic anions for forming the salts include phosphates and halides (for example chlorides or bromides). The anions listed above may be particularly useful for improving the compatibility of the primary drying agent with the modified alkyd resin.

Suitable primary drying agents can be prepared according to known procedures or can be obtained commercially. Examples of suitable commercially available primary drying agents include Borchers® VP 0132 (Borchers), DriCAT® 3 (Dura), DriCAT® 4 (Dura), Nuodex® Drycoat (Venator) and Borchi® OXY-Coat (Borchers).

The percentage of manganese, vanadium and iron, and mixtures thereof in the coating composition may be dependent on the type of modified alkyd resin used.

The coating composition can comprise 0.0001 % by weight or greater, such as 0.0003 % by weight or greater, of a metal selected from the group comprising manganese, vanadium and iron, and mixtures thereof, or can comprise 0.8 % by weight or lower, such as 0.3 % by weight or lower, of a metal selected from the group of manganese, vanadium and iron, and mixtures thereof based on the total weight of the composition. The metal selected from the group comprising manganese, vanadium and iron, and mixtures thereof may be present in the coating composition in an amount of from 0.0001 to 0.8 % by weight, such as from 0.0003 to 0.3 % by weight, based on the total weight of the coating composition.

The percentage of manganese, vanadium and iron, and mixtures thereof may alternatively be defined in terms of the solid metal content relative to the solid modified alkyd resin content. The percentage of solid metal relative to the solid modified alkyd resin can be from 0.0001 to 1.0 % by weight, such as from 0.0003 to 0.3 % by weight, of metal based on the solid modified alkyd resin.

The coating composition may further comprise a secondary or coordination drier. The secondary or coordination drier may enhance the homogeneous through drying of a coating film.

Coordination driers, also referred to synonymously as through driers, may promote the film-forming process by interaction with the carboxyl and hydroxyl groups in the polymeric binder. This way, coordination driers can bridge two or more polymer chains. The carboxyl and hydroxyl groups may be initially present in the binder molecule or formed during the autoxidation process. Typical coordination driers may be selected from the group comprising zirconium (Zr), strontium (Sr), aluminium (Al), bismuth (Bi), lanthanum (La), and neodymium (Nd) based metal driers.

Secondary driers are also referred to synonymously as auxiliary driers. These metal driers exist in a single oxidation state and are not catalytically active by themselves. However, secondary driers may affect the rate-of-dry by interacting with the primary drying agent. Typical secondary driers may be selected from calcium (Ca), barium (Ba), potassium (K) and lithium (Li) metal soaps.

### SOLVENT

The coating composition may comprise an aqueous emulsion.

The coating composition may comprise a solvent. The term "solvent" refers to a non-aqueous solvent, such as an organic solvent. The coating compositions of the present invention may be substantially free of water, or, in some cases, completely free of water.

Suitable solvents for use in the compositions of the present invention include aliphatic, cycloaliphatic and aromatic hydrocarbons and oxygenated solvents, such as hexane, heptane, octane, isooctane, cyclohexane, cycloheptane, toluene and xylene; isoparafins; ketones, such as methyl ethyl ketone and methyl isobutyl ketone; alcohols, such as isopropyl alcohol, normal-butyl alcohol and normal-propyl alcohol; monoethers of glycols, such as the monoethers of ethylene glycol and diethylene glycol; di-ethers of glycols such as dipropylene glycol dimethyl ether; monoether glycol acetates, such as 2-ethoxyethyl acetate; as well as compatible mixtures thereof.

The solvent may be selected from hydrocarbon solvents available under the trademarks Shellsol® H, Shellsol® K, Shellsol® D40, Shellsol® D60, Shellsol® D70, and Shellsol® AB, all from Shell Chemicals, the Netherlands, the trademarked Solvesso® 150 solvent from Esso and also: Exxsol® D40, Exxsol® D60 and Exxsol® D80, and solvents such as ethyl diglycol, ethyl glycol acetate, butyl glycol, butyl glycol acetate, butyl diglycol, butyl diglycol acetate, methoxypropylene glycol acetate, propylene glycol, propylene glycol mono methyl ether and dipropylene glycol mono methyl ether.

The solvent may be a non-aromatic solvent. The solvent may be an aliphatic hydrocarbon solvent. The solvent may be an aliphatic hydrocarbon solvent, such as a high-boiling aliphatic hydrocarbon solvent, such as Shellsol® D40 and D60.

The coating composition can comprise 5 % by weight or greater, such as 10 % by weight or greater, of a solvent, or can comprise 50 % by weight or lower, such as 40 % by weight or lower, of a solvent. The solvent may be present in the coating composition in an amount of from 5 wt% to 50 wt%, such as from 10 wt% to 40 wt%, based on the total weight of the coating composition.

### OTHER INGREDIENTS/ADDITIVES

The coating compositions of the present invention may comprise further components, such as colorants. The colorant component of the coating composition may comprise an inorganic or organic, transparent or non-transparent pigment. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including silica, barium sulfate, magnesium silicate, calcium silicate, mica, micaceous iron oxide, calcium carbonate, zinc oxide, aluminium hydroxide and aluminium silicate, gypsum, feldspar, talcum, kaolin, and the like. The amount of pigment that can be used to form the coating composition is understood to vary, depending on the particular composition application, and can be zero when a clear composition is desired.

The coating composition of the present invention may further comprise anti-skinning agents and anti-oxidants such as but not limited to methyl ethyl ketoxime, butyraldoxime, cyclohexanone oxime, methyl isobutyl ketoxime, acetone oxime, 2-pentanone oxime, 2-cyclohexylphenol, 4-cyclohexylphenol, mono-tertiary butylhydroquinone, diethyl hydroxylamine, 2-[(1-methylpropyl)amino]ethanol and 2,4-pentadione and the like.

The coating composition may further comprise an oxime.

The coating compositions of the present invention may include other additives, for example catalysts, other pigments and pigment pastes, dyes, fillers, stabilizers, thixotropic agents, anti-sagging agents, anti- oxidants, antifouling agents, anti-gelling agents, bactericides, fungicides, algaecides, insecticides, anti-settling agents, antifoaming agents, slip agents, flow and levelling agents, rheological modifiers, photo-initiators, UV-absorbers, synergists, HALS-radical scavengers, corrosion inhibitors, matting agents, waxes, mineral oils, flame retardants, antistatic agents, loss of dry inhibitors, optical brighteners, adhesion promoters, diluents, elastomers, plasticizers, air release agents, desiccants, anti-crater additives, reinforcing agents, dispersing aids, substrate wetting agents, odorants, corrosion-inhibitive pigments, additional hardeners and additional curable compounds, depending on the application. Certain inventions of the coating compositions of the present invention include surface active agents, such as any of the well known anionic, cationic or nonionic surfactants or dispersing agents. Examples of suitable additives that may be added to the coating composition may be found in Additives Guide, Paint & Coatings Magazine, June 2013, hereby incorporated by reference. If desired, other resinous materials can be utilized in conjunction with the aforementioned alkyd resins. The metal drier combinations and optionally colorants, pigments and extenders and optionally other additives may be formulated into the coating compositions by mixing and, if appropriate, dispersing and grinding with the liquid binder.

The coating composition may be formulated as a one package coating composition, also referred herein as a one-component (1 K) coating composition.

A "1 K" or "one package" composition will be understood as referring to a composition wherein all of the components are maintained in the same container after manufacture, during storage, etc. A "two package" or "2K" composition will be understood as referring to a composition wherein two components are maintained separately until just prior to application. A "multi package" or "multicomponent" composition will be understood as referring to a composition wherein various components are maintained separately until just prior to application.

### USE

The coating composition according to the invention can be used and/or formulated as varnish, lacquer, paint, stain, enamel, printing ink or floor covering and similar compositions which contain auto-oxidisable alkyd resins.

Thus, the present invention also relates to the use of the coating composition of the invention in a varnish, lacquer, paint, stain, enamel, printing ink or floor covering.

The present invention may include the use of the coating composition of the invention as a paint, such as an architectural paint.

### COATED ITEM

The present invention also relates to a substrate having applied to at least a portion thereof a coating composition of the invention.

The coating compositions of the present invention can be applied to various substrates including wood, paper, foam, and synthetic materials (such as plastics including elastomeric substrates), leather, textiles, glass, ceramic, metals (such as iron, steel and aluminium), concrete, cement, brick, and the like.

As a result, the present invention is also directed to substrates partially or fully coated with a coating composition of the present invention. The substrates may be pre-treated before application of the coating composition. The substrates may be post-treated after application of the coating composition, with any other compositions.

The present invention also relates to a method of coating at least a portion of a substrate comprising applying thereto a coating composition of the invention.

Any known method can be used to apply the coating compositions of the invention to a substrate. Non-limiting examples of such application methods are spreading (e.g. with paint pad or doctor blade, or by brushing or rolling), spraying (e.g. air-fed spray, airless spray, hot spray, and electrostatic spray), flow coating (e.g. dipping, curtain coating, roller coating, and reverse roller coating), and electrodeposition (see generally, R. Lambourne, Editor, Paint and Surface Coating: Theory and Practice, Eilis Horwood, 1987, page 39 et seq.).

The coating compositions of the present invention can be applied and fully cured at ambient temperature conditions in the range of from -10°C to 50°C. Curing of said polymer composition according to the invention typically can proceed very rapidly, and in general can take place at a temperature within the range of from -10°C to +50°C, in particular from 0°C to 40 °C, more in particular from 3 to 25°C. However, compositions of the present invention may be cured by additional heating.

The coating compositions of the present invention may be used as a single coating, a top coating, a base coating in a two-layered system, or a layer of a multi-layered system including a clear top coating composition, colorant layer and base coating composition, or as a primer layer. A typical opaque system may comprise: 1 or 2 layers primer and 1 or 2 layers of top coat (a total of 3 layers). Alternative opaque systems may comprise: 1 primer layer, 1 layer of mid coat and 1 layer top coat. Examples of transparent systems may comprise 1 layer of impregnant and 3 layers of top coats or 3 layers of top coat for maintenance work.

### Examples

Several examples and comparative examples are described hereunder illustrating the effect of the compositions according to the present disclosure on the drying properties.

Unless otherwise indicated, all parts and all percentages in the following examples, as well as throughout the specification, are parts by weight or percentages by weight respectively. The following test methods were used to evaluate the films and coatings prepared according to the disclosure.

References in the Examples to sorbic acid are to the naturally occurring, commercially available form (2E,4E)-hexa-2,4-dienoic acid.

Resin A was prepared as follows:
574.5 parts of tall oil fatty acids was added to a reaction vessel and 193.8 parts of pentaerythritol, 201.2 parts of phthalic anhydride, 31.0 parts of sorbic acid and xylene as an azeotropic solvent were added under mixing. The reaction mass was heated to 210 °C and kept at this temperature under nitrogen. The reaction water, i.e. theoretical amount of water, 64.7 parts, was removed during the reaction. Samples were taken periodically for determination of acid value and the reaction was stopped when the acid value was less than 10 mg KOH/g. The resin was cooled to 130 °C and vacuum, approx. 450 mm Hg, was applied for 2 hours to distil off the xylene.

Resin A is synthesised from 57.45 wt% of tall oil fatty acid, 20.12 wt% of phthalic anhydride, 19.38 wt% of pentaerythritol and 3.1 wt% of sorbic acid.

Resin B was prepared as follows:
628.8 parts of tall oil fatty acids was added to a reaction vessel and 182.2 parts of pentaerythritol, 189.0 parts of phthalic anhydride and xylene as an azeotropic solvent were added under mixing. The reaction mass was heated to 220 °C and kept at this temperature under a nitrogen atmosphere. The reaction water, i.e. theoretical amount of water 61.8 parts, was removed during the reaction. Samples were taken periodically for determination of acid value and the reaction was stopped when the acid value was less than 10 mg KOH/g. The resin was cooled to 130 °C and vacuum, approx. 450 mm Hg, was applied for 2 hours to distil off the xylene.

Resin B is synthesised from 62.88 wt% of tall oil fatty acid, 18.22 wt% of pentaerythritol and 18.90 wt% of phthalic anhydride.

The components of Resin A and Resin B are summarised in Table 1 below.

**Table 1**

| | **Component (wt%)** | | | |
|---|---|---|---|---|
| | **Tall Oil fatty acid** | **Phthalic anhydride** | **Pentaerythritol** | **Sorbic Acid** |
| Resin A | 57.45 | 20.12 | 19.38 | 3.1 |
| Resin B | 62.88 | 18.90 | 18.22 | 0 |

The viscosity values were measured with a Brookfield viscometer model CAP 2000, with cone- and-plate geometry according to ISO 2884.

Molar mass distribution was measured by size exclusion chromatography (SEC/GPC). The instrumental set-up consists of a Waters Alliance 2695 Separations Module coupled with a Waters 2414 refractive index detector. Tetrahydrofuran (THF) at a flow rate of 1 mL/min was used as the mobile phase with two PLgel Mixed-C 300 x 7.5 mm columns. The columns were conditioned at 35 °C and calibrated by Agilent EasiVial polystyrene standards covering the molar mass range of 162 to ∼ 6 × 10⁶ g/mol. Samples were prepared as solutions in THF at a concentration of approximately 3 mg/mL and the solutions were filtered with 0.45 µm filters and injected at a volume of 100 µL.

Acid values were determined by potentiometric titration according to ISO 2114.

The hydroxyl number was measured according to a modified version of the ASTM method D 1957-86 whereby the free hydroxyl groups of the resin are acetylated at room temperature using the catalyst N-methylimidazol in the absence of pyridine. The amount of consumed anhydride is determined by back titration with a solution of KOH in ethanol and the value is expressed in mg KOH/g.

The properties of both resins can be found in Table 2 below.

**Table 2**

| | Resin A | Resin B |
|---|---|---|
| Acid number (mg KOH/g) | < 10 | < 10 |
| Hydroxyl number (mg KOH/g) | 50 | 51 |
| Oil length | 70 | 70 |
| Viscosity (mPA s) | 34200 | 31530 |
| Mn (g/mol) | 4227 | 3751 |
| Mw (g/mol) | 33704 | 15239 |

Resin A was blended with the components according to the formulations given in Table 3, so as to prepare coating compositions of the examples according to the invention (Examples 1 to 5) and a comparative example (Example 6). The coating compositions were aged overnight before the drying performance was evaluated.

The drying stages of the coating compositions were assessed using a BK-drying recorder (Sheen Instruments Ltd). A wet coating layer was cast on a rectangular glass strip 30.5 x 2.5 cm by using a sheen cube with a gap size of 150 µm. A vertical blunt needle was positioned into the freshly applied film loaded by 5 g of brass and then dragged through the drying coating layer at a speed of 24.4 mm/h in a direction parallel to the length of the coat. As a freshly applied alkyd coating is a viscous liquid, the needle penetrates through the coating onto the glass plate and creates a score. As the physical drying and autoxidation of the alkyd coating progresses the viscosity of the drying film rises and the resistance to penetration by the needle increases. During the drying process, the needle creates a typical pattern and the various drying stages can be read off from the scribed pattern.

The drying times were determined in terms of four stages, defined as follows:
Run back - the film flows back together when the stylus moves through it and no groove is formed. This phase is characterised by the evaporation of the solvent from the paint.
Continuous track - the film is starting to set up. It does not flow back together after the stylus moves through it bringing about a groove in the film. In this stage, the viscosity of the pain film has substantially increased. This phase ends when the point of "start of gel tear" is reached.
Gel tear - the stylus rips the surface skin of the film. The film is starting to surface dry but is not through dry.
Surface trace - the stylus leaves a mark on the surface of the film. The phase is characterised by that the film is starting to through dry. At the end of this phase, the resistance becomes total and no further penetration occurs. The alkyd film has reached the status of "through dry".

The results are shown in Table 3.

**Table 3**

| | **Examples** | | | | | |
|---|---|---|---|---|---|---|
| wt% | **1** | **2** | **3** | **4** | **5** | **6*** |
| Resin A | 82.2 | 81.9 | 82.1 | 82.4 | 81.9 | 81.9 |
| Aliphatic solvent | 14.5 | 14.5 | 14.5 | 14.5 | 14.5 | 14.5 |
| V drier 1 (5%)ⁱ | 0.5 | | | | | |
| V drier 2 (3%)ⁱⁱ | | 0.8 | | | | |
| V drier 3 (4%)ⁱⁱⁱ | | | 0.6 | | | |
| Mn drier 1 (1%)^{iv} | | | | 0.3 | | |
| Iron drier 1 (1%)^{v} | | | | | 0.8 | |
| Co drier (3%) | | | | | | 0.8 |
| methyl ethyl ketoxime | 0.5 | 0.5 | 0.5 | 0.5 | 0.5 | 0.5 |
| Ca drier (5%)^{Vi} | 1.5 | 1.5 | 1.5 | 1.5 | 1.5 | 1.5 |
| Zr drier (18%)^{Vii} | 0.8 | 0.8 | 0.8 | 0.8 | 0.8 | 0.8 |

| **Drying times (h:m) at 5°C/ 80% RH** | | | | | | |
|---|---|---|---|---|---|---|
| run back | 1:30 | 2:15 | 0:30 | 1:00 | 1:00 | > 24 h |
| start of gel tear | 1:30 | 2:15 | 2:30 | 1:00 | 6:00 | > 24 h |
| end of gel tear | 4:00 | 8:15 | 10:00 | 3:15 | 6:00 | > 24 h |
| end of surface trace | 9:00 | 8:15 | 10:10 | > 24 h | > 24 h | > 24 h |

| | | | | | | |
|---|---|---|---|---|---|---|
| ⁱBorchers® VP 0132 (Borchers) ⁱⁱDriCAT® 3 (Dura) ⁱⁱⁱDriCAT® 4 (Dura) ^{iv}Nuodex® Drycoat (Venator) ^{v}Borchi® OXY-Coat (Borchers) ^{vi}Durham Nuodex Calcium 5N (Venator) ^{vii}Durham Nuodex Zirconium 18 (Venator) *Comparative example | | | | | | |

The results of Table 3 show that the alkyd resin modified with 3 wt% of sorbic acid (Resin A) shows a fast drying performance in the presence of vanadium, manganese and iron based driers under 5°C and 80% relative humidity, while under the same conditions and in the presence of the cobalt drier limited drying activity took place and the coating film was still wet after 24 hours.

The coating compositions of the examples according to the invention (Examples 7 to 9) and of the comparative examples (Examples 10 to 12) were prepared by blending the components according to the formulations given in Table 4. The test compositions were aged overnight before the drying performance was evaluated.

### Determination of degree of dryness of the paint films:

The time necessary for reaching a specified degree of non-tackiness of the paint film (the drying time) was determined using a paint applied onto a glass panel; each measurement was carried out on a different part of the film surface.

### Stage Dust Free: Coating drying test (ISO 1517):

0.5 g of Ballotini glass beads was poured onto the surface of the film placed horizontally to form a band 20 mm wide, in a manner ensuring that individual beads form a single layer. After 10 seconds the tested film is tilted by 20° and several times wiped over with a brush. Drying to stage Dust Free is attained when all beads are removed without leaving any trace on the film surface. The determination is repeated each 10 minutes after paint application until the above degree of non-tackiness is reached.

### Stages Tack Free and Hard Dry:

Determination of the drying times time, using of different weights (Tack Free stage - 20 g and 200 g, Hard Dry stage - 2000 g stage). A square of special paper (K-4 Power Cable Paper from Crocker Technical Papers Inc. or comparable quality paper) is carefully put onto the film surface; a rubber ring is then placed on the paper and a 20-g, 200 g or 2000-g rider is then placed in the center of the rubber ring; the weight and the ring are removed after 60 seconds. The tested panel is then allowed to fall freely by the longer edge from a height of 30 mm. Stages Tack Free or Hard Dry of drying are reached when the paper square falls off the film after the impact. The determination is repeated each 0.5 hours.

### Pendulum damping test:

The Persoz hardness of films was assessed using the pendulum damping test according to ISO 1522. The coating films were held at 23°C and 50% relative humidity and the hardness development time was monitored with a Persoz pendulum after 1 day, 7 days, 14 days and 28 days. The time for damping from a 12° displacement to a 4° displacement was recorded. For reference, lower film hardness is illustrated by a shorter damping time.

The results are shown in Table 4.

**Table 4**

| | **Examples** | | | | | |
|---|---|---|---|---|---|---|
| wt% | **7** | **8** | **9** | **10*** | **11*** | **12*** |
| Resin A | 60 | 60 | 60 | | | |
| Resin B | | | | 60 | 60 | 60 |
| Aliphatic solvent | 39.0 | 39.3 | 39.2 | 39.0 | 39.3 | 39.2 |
| V drier 1 (5%)ⁱ | 0.6 | | | 0.6 | | |
| Mn drier 1 (1%)ⁱⁱ | | 0.3 | | | 0.3 | |
| Fe drier 1 (1%)ⁱⁱⁱ | | | 0.4 | | | 0.4 |
| methyl ethyl ketoxime | 0.4 | 0.4 | 0.4 | 0.4 | 0.4 | 0.4 |

| **drying times (days) at 23°C/ 50% RH** | | | | | | |
|---|---|---|---|---|---|---|
| dust free | 0.1 | 0.15 | 0.15 | 1 | 1 | 1 |
| tack free 20 g | 0.15 | 0.35 | 1 | 5 | 1 | 1 |
| tack free 200 g | 2 | 1 | 1 | 16 | 13 | 13 |
| through dry 2000 g | 6 | 6 | 6 | 20 | 22 | 28 |

| **pendulum damping test (seconds) at 23°C/ 50% RH** | | | | | | |
|---|---|---|---|---|---|---|
| 1 day | 34 | 32 | 33 | 22 | 25 | 21 |
| 7 days | 58 | 49 | 60 | 34 | 34 | 29 |
| 14 days | 89 | 63 | 66 | 47 | 36 | 33 |
| 28 days | 114 | 66 | 80 | 64 | 44 | 35 |

| | | | | | | |
|---|---|---|---|---|---|---|
| ⁱBorchers® VP 0132 (Borchers) ⁱⁱNuodex® Drycoat (Venator) ⁱⁱⁱBorchi® OXY-Coat (Borchers) *Comparative example | | | | | | |

The results of Table 4 show that Resin A, modified with 3 wt% of sorbic acid, shows a faster drying performance in the presence of vanadium, manganese and iron based driers compared to an analogous alkyd resin without the sorbic acid modification (Resin B). The sorbic acid modified alkyd resin (Resin A) rapidly forms a harder and more resistant film compared to a corresponding resin made without the sorbic acid (Resin B).

Whereas particular examples of this invention have been described above for purposes of illustration, it will be evident to those skilled in the art that numerous variations of the details of the present invention may be made without departing from the invention as defined in the appended claims.

## Claims

1. An auto-oxidisable coating composition comprising:
(a) a modified alkyd resin, wherein the modified alkyd resin comprises the reaction product of reactants comprising:
i. a polybasic acid or anhydride thereof;
ii. a polyhydric alcohol;
iii. an unsaturated fatty acid or oil; and
iv. an unsaturated conjugated monocarboxylic acid having up to 10 carbon atoms; and
(b) a primary drying agent comprising a metal selected from the group comprising manganese, vanadium and iron, and mixtures thereof, wherein the primary drying agent is substantially free of cobalt.

2. The coating composition according to claim 1, wherein the polybasic acid or anhydride thereof is selected from the group comprising phthalic acid, phthalic anhydride, isophthalic acid, terephthalic acid, tetrahydrophthalic anhydride, succinic acid, 1,4-cyclohexane dicarboxylic acid, trimellitic anhydride, and mixtures thereof, such as wherein the polybasic acid or anhydride comprises phthalic anhydride.

3. The coating composition according to claim 1 or 2, wherein the polyhydric alcohol is selected from the group comprising pentaerythritol, dipentaerythritol, glycerol, and mixtures thereof, such as wherein the polyhydric alcohol comprises pentaerythritol.

4. The coating composition according to any preceding claim, wherein the unsaturated fatty acid or oil is selected from the group comprising tall oil fatty acid; fatty acids derived from safflower oil, linseed oil, soya bean oil, safflower oil, tung oil, sunflower oil, rapeseed oil, peanut oil, sardine oil, herring oil, tallow oil and cottonseed oil; oil derived from tall oil fatty acid, safflower oil, linseed oil, soya bean oil, safflower oil, tung oil, sunflower oil, rapeseed oil, peanut oil, sardine oil, herring oil, tallow oil and cottonseed oil; and mixtures thereof.

5. The coating composition according to any preceding claim, wherein the modified alkyd resin comprises less than 10 % by weight, such as less than 7 % by weight, of the unsaturated conjugated monocarboxylic acid.

6. The coating composition according to any preceding claim, wherein the unsaturated conjugated monocarboxylic acid is of the formula R-CO₂H, wherein R represents a C₄-C₉ alkenyl group comprising two conjugated double bonds.

7. The coating composition according to claim 6, wherein the unsaturated conjugated monocarboxylic acid is selected from the group comprising 2,4-hexadienoic acid, 2,4-pentadienoic acid, 2,4-heptadienoic acid, 3,5-heptadienoic acid, 2,4-octadienoic acid, 3,5-octadienoic acid, 2,4-nonadienoic acid, 8-methyl-4,6-nonadienoic acid, and mixtures thereof, such as wherein the unsaturated conjugated monocarboxylic acid comprises 2,4-hexadienoic acid.

8. The coating composition according to any preceding claim, wherein the primary drying agent further comprises a nitrogen donor ligand selected from the group comprising monodentate, bidentate, tridentate, tetradentate, pentadentate and hexadentate nitrogen donor ligands.

9. The coating composition according to any preceding claim, further comprising a secondary drying agent comprising a metal salt of an organic acid wherein the metal is selected from the group comprising zirconium, strontium, zinc, aluminium, bismuth, neodymium, lanthanium, calcium, lithium, barium and potassium.

10. The coating composition according to any preceding claim, further comprising an aliphatic solvent.

11. The coating composition according to any preceding claim, wherein the composition is formulated as a one component composition.

12. A paint, varnish, lacquer, stain, enamel or printing ink comprising a coating composition according to any of claims 1 to 11.

13. A substrate coated on at least a portion thereof with a coating composition according to any of claims 1 to 11.

14. A method of coating at least a portion of a substrate comprising applying thereto a coating composition according to any of claims 1 to 11.

15. Use of a primary drying agent in a coating composition comprising a modified alkyd resin, wherein the modified alkyd resin comprises the reaction product of reactants comprising:
i. a polybasic acid or anhydride thereof;
ii. a polyhydric alcohol;
iii. an unsaturated fatty acid or oil; and
iv. an unsaturated conjugated monocarboxylic acid having up to 10 carbon atoms;
wherein the primary drying agent comprises a metal selected from the group comprising manganese, vanadium and iron, and mixtures thereof, and wherein the primary drying agent is substantially free of cobalt.
